# EUROPÄISCHE PATENTSCHRIFT

(11) **EP 3 209 475 B1**
(45) Veröffentlichungstag und Bekanntmachung des Hinweises auf die Patenterteilung: **08.07.2020**
(21) Anmeldenummer: 14790561.6
(22) Anmeldetag: 23.10.2014
(51) Int. Cl.: B29C 45/44, B29C 45/33, F16B 21/00

(54) **VERFAHREN ZUR HERSTELLUNG EINES KUNSTSTOFFBAUTEILS UND KUNSTSTOFFBAUTEIL**
METHOD FOR PRODUCING A PLASTIC COMPONENT AND PLASTIC COMPONENT
PROCÉDÉ DE FABRICATION D'UN COMPOSANT EN PLASTIQUE ET COMPOSANT EN PLASTIQUE

(43) Veröffentlichungstag der Anmeldung: 30.08.2017
(73) Patentinhaber: ElringKlinger AG, 72581 Dettingen (DE)
(72) Erfinder: GRUHLER, Tobias Michael, 72793 Pfullingen (DE); GRUPP, Andreas, 73230 Kirchheim (DE); SEMMLER, Thomas, 72589 Westerheim (DE)
(74) Vertreter: Hoeger, Stellrecht & Partner Patentanwälte mbB
(86) Internationale Anmeldenummer: PCT/EP2014/072729
(87) Internationale Veröffentlichungsnummer: WO 2016/062343

(56) Entgegenhaltungen:
- EP-A1- 2 366 526
- EP-A2- 2 213 886
- WO-A1-2013/088447
- WO-A1-2013/171266
- DE-A1-102013 207 955
- FR-A1- 2 768 360
- FR-A1- 2 799 407
- US-A1- 2002 037 389
- US-A1- 2011 142 535

## Beschreibung

Die vorliegende Erfindung betrifft ein Verfahren zur Herstellung eines Kunststoffbauteils für einen Antriebsstrang eines Kraftfahrzeugs.

Bei Kunststoffbauteilen sind vorzugsweise Befestigungsstellen vorgesehen, um beispielsweise Schläuche, Kabel und sonstige Leitungen an dem Kunststoffbauteil festlegen zu können. Die Befestigungsstellen sind dabei beispielsweise durch metallische Einlagen in einem Kunststoff-Grundkörper des Kunststoffbauteils gebildet.

Verschiedene Varianten von Befestigungsvorrichtungen sind in den folgenden Druckschriften beschrieben:
EP 2 213 886 A2, US 2011/142535 A1, WO 2013/088447 A1,
DE 10 2013 207 955 A1, EP 2 366 526 A1, FR 2 768 360 A1,
WO 2013/171266 A1, US 2002/037389 A1, FR 2 799 407 A1.

Der vorliegenden Erfindung liegt die Aufgabe zugrunde, ein Verfahren zur Herstellung eines Kunststoffbauteils bereitzustellen, mittels welchem ein Kunststoffbauteil mit mindestens einem Befestigungsabschnitt zur Befestigung mindestens eines Befestigungselements einfach herstellbar ist.

Diese Aufgabe wird erfindungsgemäß durch ein Verfahren zur Herstellung eines Kunststoffbauteils gemäß Anspruch 1 gelöst.

Dadurch, dass erfindungsgemäß der Grundkörper und mindestens ein Befestigungsabschnitt in einem einzigen Verfahrensschritt hergestellt werden, kann das Kunststoffbauteil einfach und somit vorzugsweise auch kostengünstig hergestellt werden.

Bei einer Ausgestaltung der Erfindung kann vorgesehen sein, dass der Grundkörper und der mindestens eine Befestigungsabschnitt in einem Spritzgussverfahren hergestellt werden.

Insbesondere kann vorgesehen sein, dass der mindestens eine Befestigungsabschnitt durch geeignete Formgebung des Grundkörpers herstellbar ist.

Günstig kann es sein, wenn das Formgebungswerkzeug als ein Negativformwerkzeug ausgebildet ist.

Bei einer Ausgestaltung der Erfindung kann vorgesehen sein, dass mindestens ein Befestigungsabschnitt, insbesondere mindestens ein Hinterschneidungsabschnitt, mittels mindestens eines sich in Richtung des Werkstücks und/oder in einer Einbringrichtung des Befestigungselements erweiternden Vorsprungs des Formgebungswerkzeugs gebildet wird.

Ein sich in Richtung des Werkstücks erweiternder Vorsprung des Formgebungswerkzeugs ist insbesondere ein von einem Grundkörper des Formgebungswerkzeugs hervorstehender und sich ausgehend von dem Grundkörper erweiternder Abschnitt des Formgebungswerkzeugs.

Der mindestens eine Vorsprung des Formgebungswerkzeugs wird bei der Herstellung des Grundkörpers und des Befestigungsabschnitts vorzugsweise mit dem Material des Grundkörpers umgeben, insbesondere umspritzt.

Der mindestens eine Vorsprung wird vorzugsweise durch Verformung des Formgebungswerkzeugs und/oder durch Verformung des Kunststoffbauteils aus dem Befestigungsabschnitt, insbesondere aus dem Hinterschneidungsabschnitt, entfernt.

Das Formgebungswerkzeug und/oder das Kunststoffbauteil ist hierzu vorzugsweise zumindest abschnittsweise und/oder zumindest zeitweise, insbesondere vor einem vollständigen Aushärten, elastisch verformbar ausgebildet.

Es kann vorgesehen sein, dass das Formgebungswerkzeug zwei relativ zueinander bewegbare Formgebungshälften umfasst, welche im Wesentlichen komplementär zu jeweils einer Seite des Grundkörpers geformte Oberflächen aufweisen.

Mindestens ein Formgebungselement des Formgebungswerkzeugs, insbesondere mindestens ein Vorsprung eines Negativformwerkzeugs, kann vorzugsweise relativ zu einer oder relativ zu beiden Formgebungshälften bewegt werden.

Vorteilhaft kann es sein, wenn mindestens ein Formgebungselement bewegt wird, während oder nachdem das Kunststoffbauteil von dem Formgebungswerkzeug entfernt wird.

Alternativ oder ergänzend hierzu kann vorgesehen sein, dass mindestens ein Formgebungselement bewegt wird, damit das Kunststoffbauteil aus dem Formgebungswerkzeug entfernt werden kann.

Es kann vorgesehen sein, dass mindestens ein bewegbares oder bewegliches Formgebungselement mittels eines Kopplungselements, insbesondere einer Federverbindung, mit dem Formgebungswerkzeug, insbesondere mit einer Formgebungshälfte des Formgebungswerkzeugs, verbunden ist.

Das mindestens eine Formgebungselement ist vorzugsweise wahlweise und/oder wiederholt in eine Formgebungsstellung und/oder in eine Entformungsstellung bringbar.

Bei einer Ausgestaltung der Erfindung kann vorgesehen sein, dass zum Entfernen des Kunststoffbauteils aus dem Formgebungswerkzeug zunächst mindestens eine Formgebungshälfte und anschließend mindestens ein bewegbar an dieser Formgebungshälfte angeordnetes Formgebungselement von dem Kunststoffbauteil entfernt wird.

Insbesondere kann vorgesehen sein, dass zum Entfernen des Kunststoffbauteils aus dem Formgebungswerkzeug oder von dem Formgebungswerkzeug zunächst mindestens eine Formgebungshälfte und anschließend mindestens ein mit der Formgebungshälfte gekoppeltes Formgebungselement, insbesondere ein sich erweiternder Vorsprung, von dem Kunststoffbauteil entfernt wird.

Beispielsweise kann vorgesehen sein, dass zum Entfernen des Kunststoffbauteils aus dem Formgebungswerkzeug zunächst mindestens eine Formgebungshälfte von dem Kunststoffbauteil entfernt und anschließend mindestens ein Formgebungselement aus dem Kunststoffbauteil, insbesondere aus dem Befestigungsabschnitt, beispielsweise aus dem Hinterschneidungsabschnitt, herausgezogen wird.

Alternativ oder ergänzend hierzu kann vorgesehen sein, dass zum Entfernen des Kunststoffbauteils aus dem Formgebungswerkzeug zunächst mindestens ein bewegbar an einer Formgebungshälfte angeordnetes Formgebungselement und anschließend diese Formgebungshälfte von dem Kunststoffbauteil entfernt wird.

Insbesondere kann vorgesehen sein, dass mindestens ein Formgebungselement, beispielsweise ein Schieber, in einer Richtung bewegbar ist, welche quer, insbesondere senkrecht, zu derjenigen Richtung ausgerichtet ist, in welcher die Formgebungshälfte von dem Kunststoffbauteil entfernt wird.

Der Hinterschneidungsabschnitt mindestens eines Befestigungsabschnitts wird vorzugsweise durch einen quer, insbesondere senkrecht, zur Einbringrichtung des Befestigungselements bewegbares Formgebungselement des Formgebungswerkzeugs gebildet.

Unter einer Aufnahmeöffnung des Befestigungsabschnitts ist in dieser Beschreibung und den beigefügten Ansprüchen insbesondere keine Durchtrittsöffnung in dem Kunststoffbauteil derart zu verstehen, dass ein Übertritt eines Stoffes von einer ersten Seite des Kunststoffbauteils zu einer der ersten Seite gegenüberliegenden zweiten Seite des Kunststoffbauteils möglich ist. Die Aufnahmeöffnung ist somit insbesondere kein Loch in dem Kunststoffbauteil.

Bei einer Ausgestaltung der Erfindung ist vorgesehen, dass mittels eines Vorsprungs des Formgebungswerkzeugs zur Ausbildung der mindestens einen Aufnahmeöffnung und mittels mindestens eines bewegbaren Formgebungselements des Formgebungswerkzeugs mindestens eine sich nur auf einer Seite des Grundkörpers erstreckende Durchtrittsöffnung gebildet wird. Mittels dieser Durchtrittsöffnung ist insbesondere keine Verbindung zwischen einander gegenüberliegenden Seiten des Kunststoffbauteils gebildet.

Mittels des erfindungsgemäßen Verfahrens kann insbesondere ein Kunststoffbauteil einfach hergestellt werden.

Die vorliegende Erfindung betrifft daher auch ein Kunststoffbauteil für einen Antriebsstrang eines Kraftfahrzeugs.

Der Erfindung liegt diesbezüglich die Aufgabe zugrunde, ein Kunststoffbauteil bereitzustellen, welches einfach und kostengünstig herstellbar ist.

Diese Aufgabe wird erfindungsgemäß durch ein Kunststoffbauteil gemäß Anspruch 8 gelöst.

Das erfindungsgemäße Kunststoffbauteil weist vorzugsweise einzelne oder mehrere der im Zusammenhang mit dem erfindungsgemäßen Verfahren beschriebenen Merkmale und/oder Vorteile auf.
Das Kunststoffbauteil ist vorzugsweise ein einstückiges Spritzgussbauteil.

Bei der Erfindung ist vorgesehen, dass das Kunststoffbauteil eine Wandung, insbesondere eine Gehäusewandung, und mindestens einen Befestigungsabschnitt umfasst, wobei mittels der Wandung, insbesondere der Gehäusewandung, eine Innenseite und eine Außenseite des Kunststoffbauteils voneinander getrennt oder trennbar sind und wobei mindestens ein Befestigungsabschnitt vollständig auf einer der Innenseite oder der Außenseite zugewandten Seite der Wandung, insbesondere der Gehäusewandung, angeordnet ist.
Die Wandung, insbesondere die Gehäusewandung, weist somit im Bereich des Befestigungsabschnitts vorzugsweise keine Öffnung, insbesondere keine Durchtrittsöffnung (Loch) auf.
Günstig kann es sein, wenn das Kunststoffbauteil eine Wandung, insbesondere eine Gehäusewandung, und mindestens einen Befestigungsabschnitt umfasst, wobei mittels der Wandung, insbesondere der Gehäusewandung, eine Innenseite und eine Außenseite des Kunststoffbauteils voneinander getrennt oder trennbar sind und wobei mindestens ein Befestigungsabschnitt sich von der Wandung, insbesondere der Gehäusewandung, weg erstreckt.
Mindestens ein Befestigungsabschnitt umfasst vorzugsweise mindestens ein zumindest zeitweise elastisches Element, insbesondere um die Aufnahmeöffnung elastisch verformen zu können. Hierdurch kann ein Befestigungselement einfach an dem Befestigungsabschnitt angeordnet und von denselben entfernt werden.
Der Befestigungsabschnitt und die Wandung, insbesondere die Gehäusewandung, sind vorzugsweise einstückig mit dem Grundkörper ausgebildet. Insbesondere sind der Befestigungsabschnitt und die Wandung, insbesondere die Gehäusewandung, Bestandteile des Grundkörpers.
Mindestens eine Aufnahmeöffnung ist vorzugsweise seitlich von mindestens einem elastischen Element des Befestigungsabschnitts begrenzt. Ein senkrecht zur Einbringrichtung genommener Querschnitt der Aufnahmeöffnung ist hierdurch vorzugsweise variabel.

Mindestens ein Hinterschneidungsabschnitt ist durch einen Hohlraum in dem Kunststoffbauteil gebildet.
Der Hohlraum ist vorzugsweise nur einseitig offen, d.h. nur zu einer Seite des Kunststoffbauteils offen. Insbesondere kann vorgesehen sein, dass der Hohlraum ausschließlich durch die Aufnahmeöffnung zugänglich ist.
Der Hohlraum ist insbesondere zu einer Außenseite des Kunststoffbauteils offen.
Es kann jedoch auch vorgesehen sein, dass der Hohlraum zweiseitig offen ist. Vorzugsweise sind dann jedoch beide Öffnungen des Hohlraums auf einer einzigen Seite des Kunststoffbauteils, insbesondere auf einer Außenseite des Kunststoffbauteils, angeordnet.

Erfindungsgemäß ist vorgesehen, dass mindestens ein Befestigungsabschnitt als ein im Wesentlichen hohlzylindrisches Element, insbesondere eine hohlzylindrische Aufnahme, ausgebildet ist. Auf diese Weise können insbesondere rotationssymmetrische Befestigungselemente einfach und zuverlässig in dem mindestens einen Befestigungsabschnitt befestigt werden.

Es ist vorgesehen, dass eine Wandung mindestens zwei schlitzförmige Ausnehmungen umfasst. Hierdurch kann der Befestigungsabschnitt vorzugsweise flexible, elastisch oder sonstwie nachgiebig gestaltet werden, um insbesondere einen sich erweiternden Vorsprung eines Formgebungswerkzeugs einfacher entfernen zu können und/oder um mindestens ein Befestigungselement einfacher an dem Befestigungsabschnitt festlegen und/oder von demselben entfernen zu können.
Das erfindungsgemäße Kunststoffbauteil eignet sich vorzugsweise für sämtliche Abschnitte eines Antriebsstrangs eines Kraftfahrzeugs, beispielsweise als Bestandteil eines Motors, insbesondere als Bestandteil einer Ventilhaube, einer Zylinderkopfhaube oder einer Ölwanne.
Ferner kann vorgesehen sein, dass das Kunststoffbauteil ein Bestandteil eines Kupplungsgehäuses, eines Getriebegehäuses, eines Differentialgehäuses und/oder eines Antriebswellengehäuses ist.
Ebenso kann vorgesehen sein, dass das Kunststoffbauteil ein Bauteil eines Elektromotors und/oder eines Batteriegehäuses ist.

Die vorliegende Erfindung betrifft ferner ein Kraftfahrzeug, insbesondere einen Personenkraftwagen (PKW) und/oder einen Lastkraftwagen (LKW), welches mindestens ein erfindungsgemäßes Kunststoffbauteil umfasst.

Das erfindungsgemäße Kraftfahrzeug weist vorzugsweise einzelne oder mehrere der im Zusammenhang mit dem erfindungsgemäßen Verfahren und/oder mit dem erfindungsgemäßen Kunststoffbauteil beschriebenen Merkmale und/oder Vorteile auf.

Ferner können das erfindungsgemäße Verfahren zur Herstellung eines Kunststoffbauteils, das erfindungsgemäße Kunststoffbauteil und/oder das erfindungsgemäße Kraftfahrzeug einzelne oder mehrere der nachfolgend beschriebenen Merkmale und/oder Vorteile aufweisen:
Als Material für das Kunststoffbauteil kann insbesondere ein thermoplastisches Material vorgesehen sein.

Als Befestigungselement kann insbesondere ein selbstverkrallendes Befestigungselement, insbesondere ein Kabelbinder, vorgesehen sein.

Mindestens ein Befestigungsabschnitt, insbesondere mindestens eine Aufnahmeöffnung, ist vorzugsweise so dimensioniert, dass darin Befestigungselemente festlegbar sind, welche bei herkömmlichen Kunststoffbauteilen in Aufnahmen für M5-, M6- oder M8-Schrauben festlegbar sind.

Bei dem erfindungsgemäßen Verfahren wird vorzugsweise eine Zwangsentformung durchgeführt, d.h., dass das Kunststoffbauteil das Formgebungswerkzeug teilweise umgreift und somit nur durch Beaufschlagung mit einer zusätzlichen Kraft und/oder durch Verformung des Kunststoffbauteils von dem Formgebungswerkzeug lösbar ist.

Das erfindungsgemäße Verfahren ist vorzugsweise ein werkzeugfallendes Verfahren, d.h., dass das Kunststoffbauteil fertiggestellt ist, wenn es aus dem Formgebungswerkzeug entnommen wird. Vorzugsweise ist somit nur ein einziger Arbeitstakt notwendig.

Das Formgebungswerkzeug umfasst vorzugsweise eine als Stempelhälfte ausgebildete Formgebungshälfte und eine als Matrizenhälfte ausgebildete Formgebungshälfte.

Das Kunststoffbauteil kann beispielsweise ausschließlich aus einem Kunststoffmaterial, beispielsweise einem thermoplastischen Material, gebildet sein.

Ferner kann vorgesehen sein, dass das Kunststoffbauteil ein Bauteil ist, welches ein Kunststoffmaterial, insbesondere ein thermoplastisches Material, umfasst.

Das Kunststoffbauteil kann beispielsweise ein Hybridbauteil sein, welches einen Grundkörper aus einem Kunststoffmaterial und ein weiteres Element, beispielsweise ein Zusatzelement oder ein Trägerelement des Kunststoffbauteils, umfasst.

Ein Zusatzelement oder Trägerelement des Kunststoffbauteils ist vorzugsweise aus einem metallischen Material gebildet.

Beispielsweise kann vorgesehen sein, dass ein Zusatzelement oder Trägerelement des Kunststoffbauteils als ein Metallprofil oder Metallrohr ausgebildet ist.

Das Zusatzelement oder Trägerelement des Kunststoffbauteils kann beispielsweise einen rechteckigen, insbesondere quadratischen, runden oder ovalen Querschnitt aufweisen.

Das Zusatzelement oder das Trägerelement des Kunststoffbauteils kann beispielsweise als ein geschlossenes oder als ein offenes Profil ausgebildet sein. Beispielsweise ist ein Querschnitt des Zusatzelements oder des Trägerelements im Wesentlichen T-förmig, I-förmig (Doppel-T-Träger-förmig), U-förmig, etc.

Das Zusatzelement oder das Trägerelement des Kunststoffbauteils kann beispielsweise ein Bauteil sein, welches in einem Innenhochdruckumformprozess in eine gewünschte Form gebracht wurde.

Bei einer Ausgestaltung der Erfindung ist vorgesehen, dass der Grundkörper des Kunststoffbauteils und der mindestens eine Befestigungsabschnitt des Grundkörpers in einem Spritzgussverfahren an ein Zusatzelement oder Trägerelement des Kunststoffbauteils angespritzt werden.

Das Zusatzelement oder Trägerelement des Kunststoffbauteils ist insbesondere als ein Einlegeelement in das Formgebungswerkzeug einbringbar und mit Kunststoff anspritzbar oder umspritzbar.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung eines Kunststoffbauteils, welches zwei verschiedene Ausführungsformen von Befestigungsabschnitten umfasst;
- Fig. 2: eine vergrößerte Darstellung des Bereichs II aus Fig. 1;
- Fig. 3: eine teilweise geschnittene vergrößerte Darstellung des Bereichs II aus Fig. 1;
- Fig. 4: eine schematische Schnittdarstellung einer Spritzgussvorrichtung zur Herstellung eines Kunststoffbauteils, welches einen Befestigungsabschnitt gemäß Fig. 2 umfasst, wobei die Spritzgussvorrichtung in einem Ausgangszustand vorliegt, in welchem ein Innenraum der Spritzgussvorrichtung leer ist;
- Fig. 5: eine der Fig. 4 entsprechende schematische Darstellung der Spritzgussvorrichtung, wobei der Innenraum mit einem Spritzgussmaterial gefüllt ist;
- Fig. 6: eine der Fig. 5 entsprechende schematische Darstellung der Spritzgussvorrichtung, wobei eine erste Formgebungshälfte von einem hergestellten Kunststoffbauteil entfernt wird;
- Fig. 7: eine der Fig. 6 entsprechende schematische Darstellung der Spritzgussvorrichtung, wobei die erste Formgebungshälfte und ein mit dieser ersten Formgebungshälfte verbundenes Formgebungselement von dem Kunststoffbauteil entfernt werden;
- Fig. 8: eine der Fig. 7 entsprechende schematische Darstellung der Spritzgussvorrichtung, wobei beide Formgebungshälften und das bewegliche Formgebungselement von dem Kunststoffbauteil entfernt wurden;
- Fig. 9: eine vergrößerte Darstellung des Bereichs IX aus Fig. 1;
- Fig. 10: eine der Fig. 4 entsprechende schematische Schnittdarstellung einer Spritzgussvorrichtung zur Herstellung eines Kunststoffbauteils, welches einen Befestigungsabschnitt gemäß Fig. 9 umfasst, wobei die Spritzgussvorrichtung in einem Ausgangszustand vorliegt, in welchem ein Innenraum der Spritzgussvorrichtung leer ist;
- Fig. 11 eine: der Fig. 5 entsprechende schematische Darstellung der Spritzgussvorrichtung aus Fig. 10, wobei der Innenraum mit einem Spritzgussmaterial gefüllt ist;
- Fig. 12 eine: der Fig. 6 entsprechende schematische Darstellung der Spritzgussvorrichtung aus Fig. 10, wobei ein bewegliches Formgebungselement in einer Querrichtung von dem Kunststoffbauteil entfernt wird;
- Fig. 13 eine: der Fig. 12 entsprechende schematische Darstellung der Spritzgussvorrichtung aus Fig. 10, wobei das bewegliche Formgebungselement von dem Kunststoffbauteil entfernt wurde; und
- Fig. 14 eine: der Fig. 13 entsprechende schematische Darstellung der Spritzgussvorrichtung aus Fig. 10, wobei beide Formgebungshälften der Spritzgussvorrichtung samt dem beweglichen Formgebungselement von dem Kunststoffbauteil entfernt werden.

Gleiche oder funktional äquivalente Elemente sind in sämtlichen Figuren mit denselben Bezugszeichen versehen.

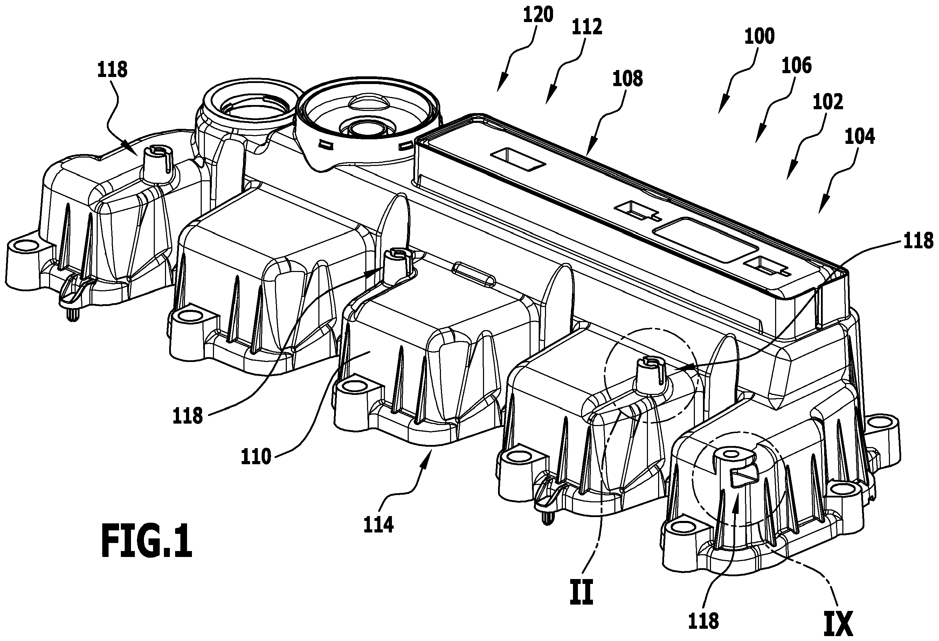

Ein in Fig. 1 dargestelltes, als Ganzes mit 100 bezeichnetes Kunststoffbauteil ist beispielsweise als eine Ventilhaube 102 oder als eine Zylinderkopfhaube 104 ausgebildet.

Das Kunststoffbauteil 100 ist insbesondere ein Spritzgussbauteil 106, welches mit einer (noch zu beschreibenden) Spritzgussvorrichtung herstellbar ist.

Das Kunststoffbauteil 100 umfasst einen Grundkörper 108, welcher eine Wandung 110, insbesondere eine Gehäusewandung 110, umfasst.

Mittels der Wandung 110 des Grundkörpers 108 ist insbesondere ein Außenraum 112 von einem Innenraum 114 trennbar.

Der Innenraum 114 ist dabei insbesondere ein Ventilraum eines Verbrennungsmotors, wenn das Kunststoffbauteil 100 als Ventilhaube 102 ausgebildet ist.

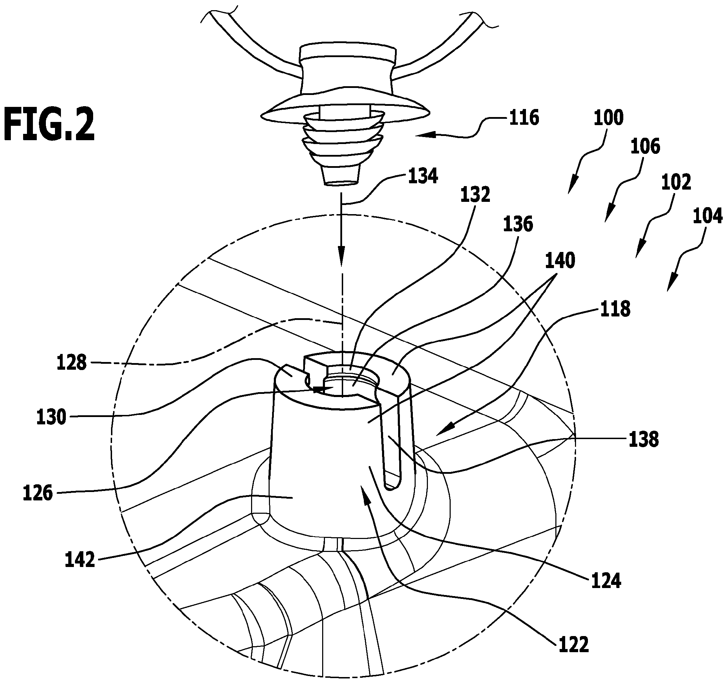

Im montierten Zustand eines Verbrennungsmotors, welcher das Kunststoffbauteil 100 umfasst, kann es vorteilhaft sein, wenn mehrere Leitungen, Kanäle, Kabel, etc. an dem Kunststoffbauteil 100 festgelegt werden können. Hierzu können Befestigungselemente 116 (siehe Fig. 2) vorgesehen sein, welche an Befestigungsabschnitten 118 des Kunststoffbauteils 100 festgelegt werden können.

Die Befestigungsabschnitte 118 sind dabei so an dem Grundkörper 108 angeordnet, dass eine Befestigung der Befestigungselemente 116 an einer dem Außenraum 112 zugewandten Außenseite 120 des Kunststoffbauteils 100 möglich ist.

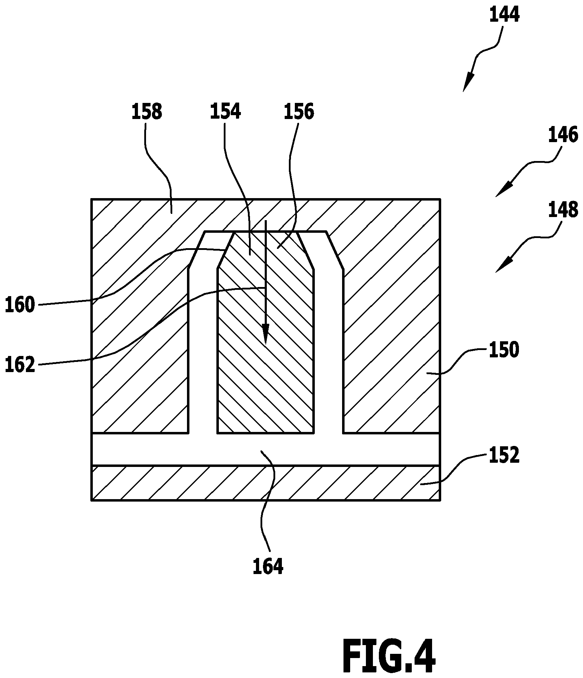

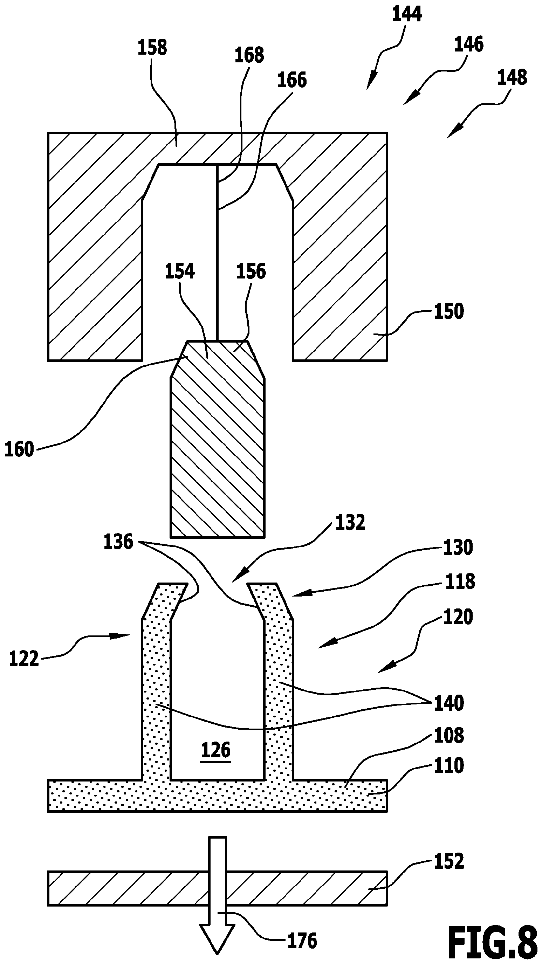

Eine in den Fig. 2 bis 8 dargestellte erste Ausführungsform eines Befestigungsabschnitts 118 umfasst eine hohlzylindrische Aufnahme 122.

Die hohlzylindrische Aufnahme 122 umfasst eine im Wesentlichen zylindermantelförmige Wandung 124, welche einen Hohlraum 126 umgibt.

Die Aufnahme 122 ist dabei so ausgerichtet, dass eine Symmetrieachse 128 der Aufnahme 122 im Wesentlichen senkrecht zu einer Haupterstreckungsrichtung 129 der Wandung 110 im Bereich des Befestigungsabschnitts 118 verläuft.

Die Aufnahme 122 ragt insbesondere von der Wandung 110 weg.

An einem der Wandung 110 abgewandten Ende 130 der Aufnahme 122 ist eine Aufnahmeöffnung 132 vorgesehen, durch welche der Hohlraum 126 zugänglich ist.

Durch diese Aufnahmeöffnung 132 ist ein Befestigungselement 116 in einer Einbringrichtung 134 zumindest abschnittweise in den Hohlraum 126 einbringbar.

Der Hohlraum 126 verjüngt sich in Richtung des Endes 130 der Aufnahme 122, so dass ein in der Einbringrichtung 134 hinter der Aufnahmeöffnung 132 angeordneter Hinterschneidungsabschnitt 136 des Befestigungselements 118 gebildet ist.

An dem Hinterschneidungsabschnitt 136 kann das Befestigungselement 116 formschlüssig festgelegt werden.

Die Aufnahme 122 umfasst ferner zwei schlitzförmige Ausnehmungen 138, welche sich im Wesentlichen parallel zur Symmetrieachse 128 erstrecken und die Wandung 124 in zwei einander gegenüberliegende Wandungsabschnitte 140 teilen.

Aufgrund der schlitzförmigen Ausnehmungen 138 sind die Wandungsabschnitte 140 der Aufnahme 122 zumindest abschnittsweise relativ zueinander und/oder relativ zu einem Basisabschnitt 142 der Aufnahme 122 bewegbar, insbesondere elastisch verformbar.

Insbesondere können die Wandungsabschnitte 140 an dem der Wandung 110 abgewandten Ende 130 der Aufnahme 122 voneinander wegbewegt werden. Die Größe der Aufnahmeöffnung 132 ist somit zumindest in geringem Umfang variabel.

Die Größenvariabilität der Aufnahmeöffnung 132 ist insbesondere zur Herstellung des Kunststoffbauteils 100 vorteilhaft.

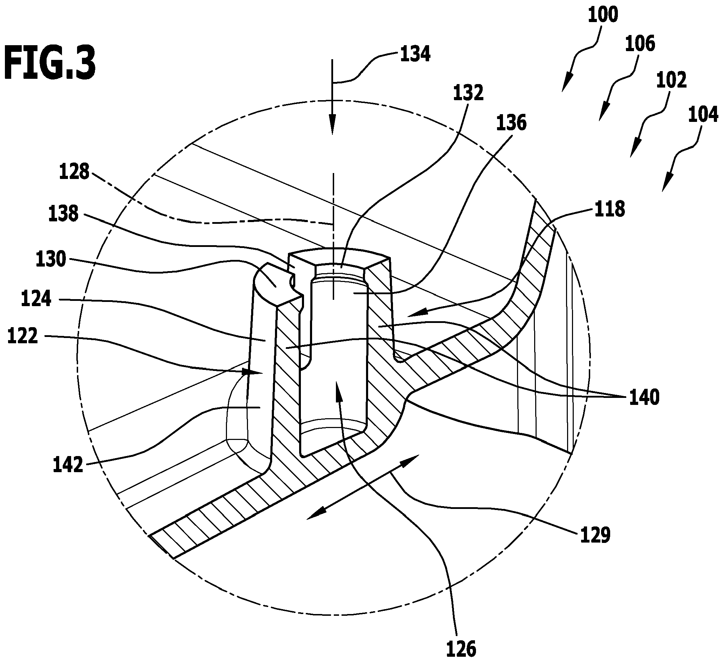

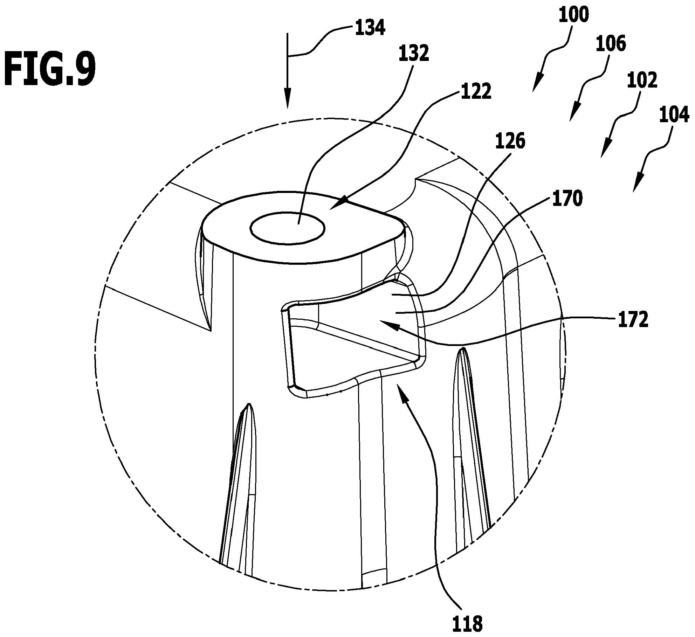

Der in den Fig. 2 und 3 dargestellte Befestigungsabschnitt 118 des Kunststoffbauteils 100 wird, insbesondere zusammen mit dem Kunststoffbauteil 100 und/oder zusammen mit dem in Fig. 9 dargestellten Befestigungsabschnitt 118, mittels einer Spritzgussvorrichtung 144 wie folgt hergestellt:
Die Spritzgussvorrichtung 144 zur Herstellung des Kunststoffbauteils 100 umfasst ein Formgebungswerkzeug 146, insbesondere ein Negativformwerkzeug 148.

Das Formgebungswerkzeug 146 umfasst eine erste Formgebungshälfte 150, insbesondere eine Matrizenhälfte, und eine zweite Formgebungshälfte 152, insbesondere eine Stempelhälfte.

Die erste Formgebungshälfte 150 umfasst ein Formgebungselement 154, welches einen Vorsprung 156 der ersten Formgebungshälfte 150 bildet.

Das Formgebungselement 154 ist insbesondere relativ zu einem Grundkörper 158 der ersten Formgebungshälfte 150 beweglich ausgebildet.

Der Vorsprung 156 umfasst einen sich erweiternden Abschnitt 160.

Somit ist der Vorsprung 156 ein sich erweiternder Vorsprung 156, bezogen auf eine von dem Grundkörper 158 weggerichtete Erstreckungsrichtung 162 des Vorsprungs 156.

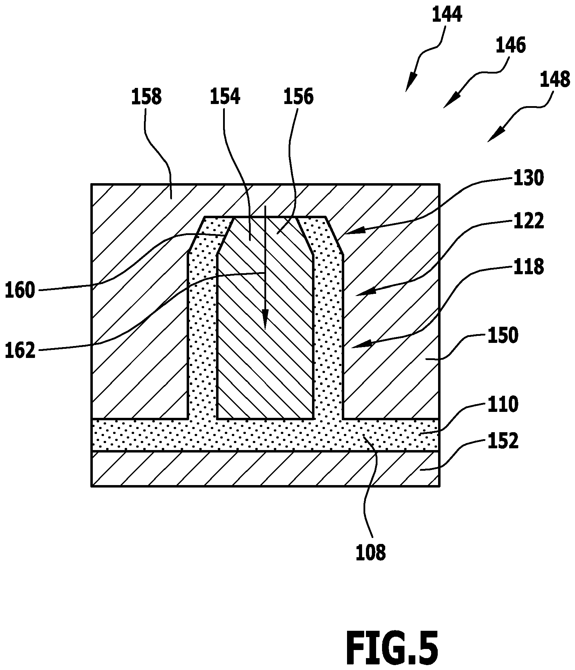

Das Formgebungswerkzeug 146 weist einen von der ersten Formgebungshälfte 150 und der zweiten Formgebungshälfte 152 umgebenen Innenraum 164 auf, welcher eine im Wesentlichen dem herzustellenden Kunststoffbauteil 100 entsprechende Form aufweist. Durch Füllen des Innenraums 164 mit einem Spritzgussmaterial kann somit das Kunststoffbauteil 100 gebildet werden (siehe Fig. 5).

Wie insbesondere Fig. 5 zu entnehmen ist, umgreift das in dem Innenraum 164 erzeugte Kunststoffbauteil 100 mittels des Endes 130 der Aufnahme 122 den sich erweiternden Vorsprung 156.

Der Vorsprung 156 kann somit nicht ohne Weiteres aus dem Hohlraum 126 der Aufnahme 122 entfernt werden.

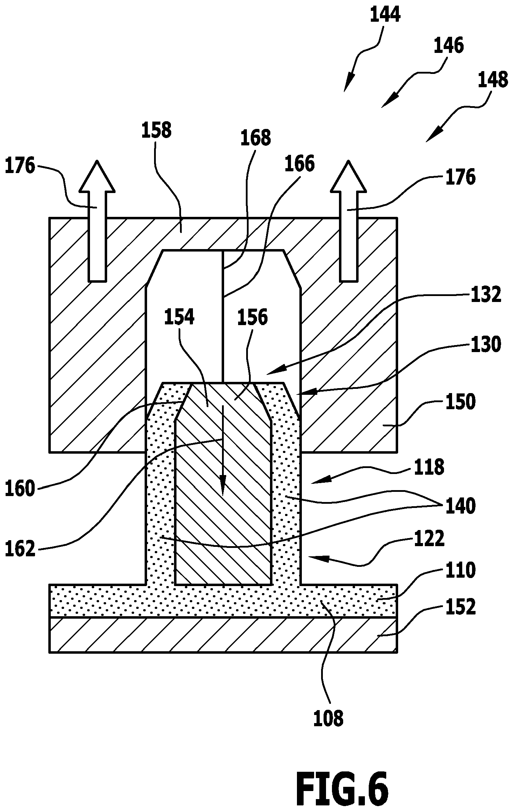

Wie Fig. 6 zur entnehmen ist, ist der Vorsprung 156, welcher durch das bewegliche Formgebungselement 154 gebildet ist, nicht fest mit dem Grundkörper 158 der ersten Formgebungshälfte 150, sondern mittels eines Kopplungselements 166 mit dem Grundkörper 158 der ersten Formgebungshälfte 150 verbunden.

Das Kopplungselement 166 ist insbesondere ein Federelement 168.

Somit kann der Grundkörper 158 der ersten Formgebungshälfte 150 von dem Kunststoffbauteil 100 entfernt werden, während der Vorsprung 156 zunächst noch in dem Hohlraum 126 der Aufnahme 122 des Kunststoffbauteils 100 verbleibt (siehe Fig. 6).

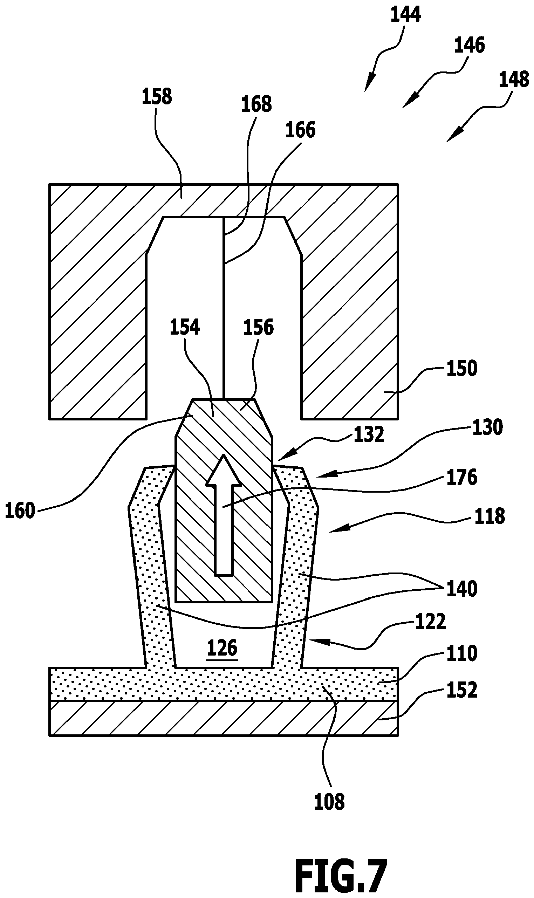

Nachdem die Wandung 124 der Aufnahme 122 nicht mehr von dem Grundkörper 158 der ersten Formgebungshälfte 150 umgeben ist, können die Wandungsabschnitte 140 der Aufnahme 122 elastisch verformt werden, um die Aufnahmeöffnung 132 zu vergrößern. Das den Vorsprung 156 bildende bewegliche Formgebungselement 154 kann somit durch die Aufnahmeöffnung 132 hindurch aus dem Hohlraum 126 der Aufnahme 122 entfernt werden (siehe Fig. 7).

Nach dem Entfernen des beweglichen Formgebungselements 154 aus dem Hohlraum 126 der Aufnahme 122 bewegen sich die vorzugsweise elastischen Wandungsabschnitte 140 automatisch in die ursprüngliche Position zurück, so dass die Aufnahme 122 erneut die dem Innenraum 164 des Formgebungswerkzeugs 146 entsprechende Form annimmt.

Mittels der Spritzgussvorrichtung 144 kann somit besonders einfach ein Befestigungsabschnitt 118 zur Befestigung von Befestigungselementen 116 gebildet werden, insbesondere in einem einzigen Verfahrensschritt, während der Herstellung des Kunststoffbauteils 100.

Eine in Fig. 9 dargestellte alternative Ausführungsform eines Befestigungsabschnitts 118 unterscheidet sich von der in den Fig. 2 bis 8 dargestellten Ausführungsform im Wesentlichen dadurch, dass die Aufnahme 122 nicht zylindrisch ausgebildet ist und der Hohlraum 126 der Aufnahme 122 zweiseitig zugänglich ist.

Bei der in Fig. 9 dargestellten Ausführungsform des Befestigungsabschnitts 118 ist eine Aufnahmeöffnung 132 vorgesehen, durch welche der Hohlraum 126 zugänglich ist.

Ferner ist eine bezüglich der Einbringrichtung 134, in welcher ein Befestigungselement 116 in die Aufnahmeöffnung 132 einbringbar ist, seitlich an der Aufnahme 122 angeordnete seitliche Öffnung 170 vorgesehen, durch welche der Hohlraum 126 ebenfalls zugänglich ist.

Mittels der Aufnahmeöffnung 132, der seitlichen Öffnung 170 und des Hohlraums 126 ist somit eine Durchtrittsöffnung 172 gebildet.

Die Durchtrittsöffnung 172 erstreckt sich dabei ausschließlich auf der dem Außenraum 112 zugewandten Außenseite 120 des Kunststoffbauteils 100. Insbesondere ist mittels der Durchtrittsöffnung 172 kein den Innenraum 114 und den Außenraum 112 miteinander verbindendes Loch in dem Kunststoffbauteil 100 gebildet.

Der Hinterschneidungsabschnitt 136 zur formschlüssigen Festlegung eines Befestigungselements 116 an der Aufnahme 122 ergibt sich bei der in Fig. 9 dargestellten Ausführungsform des Befestigungsabschnitts 118 dadurch, dass der Hohlraum 126 der Aufnahme 122, welcher bezüglich der Einbringrichtung 134 hinter der Aufnahmeöffnung 132 angeordnet ist, einen größeren Querschnitt aufweist als die Aufnahmeöffnung 132 selbst.

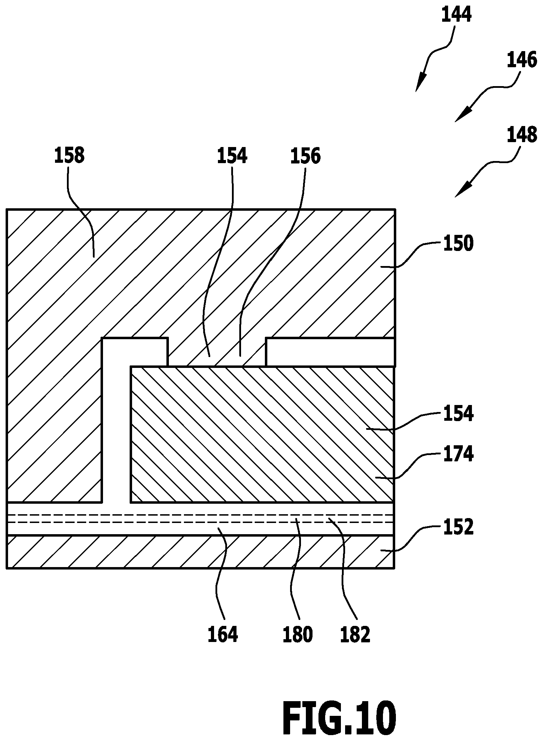

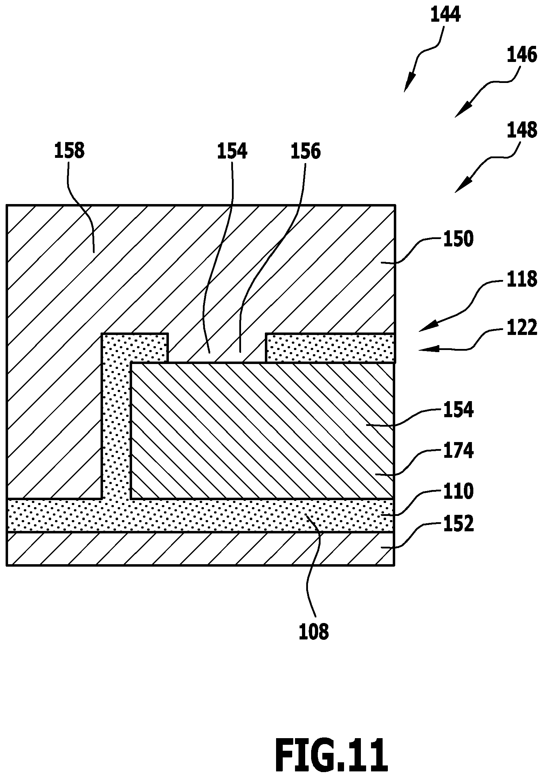

Der in Fig. 9 dargestellte Befestigungsabschnitt 118 wird wie folgt hergestellt:
Mittels der Spritzgussvorrichtung 144 wird Spritzgussmaterial in den Innenraum 164 des Formgebungswerkzeugs 146 gefüllt (siehe Fig. 10 und 11).

Zur Ausbildung des Befestigungsabschnitts 118 gemäß Fig. 9 ist ein bewegliches Formgebungselement 154, insbesondere ein Schieberelement 174, vorgesehen, welches in der in Fig. 10 dargestellten Formgebungsstellung mit einem Vorsprung 156 der ersten Formgebungshälfte 150 des Formgebungswerkzeugs 146 in Kontakt ist.

Mittels des beweglichen Formgebungselements 154 und des Vorsprungs 156 wird dabei eine Brücke der ersten Formgebungshälfte 150 gebildet.

Der zwischen den Formgebungshälften 150, 152 vorhandene Innenraum 164 wird mit dem Spritzgussmaterial gefüllt.

Wie insbesondere Fig. 11 zu entnehmen ist, führt dies dazu, dass das bewegliche Formgebungselement 154 bezüglich der Entformungsrichtungen 176, in welchen die Formgebungshälften 150, 152 voneinander und von dem Kunststoffbauteil 100 entfernbar sind, von dem Kunststoffbauteil 100 umgeben ist.

Solange das Formgebungselement 154 in der Formgebungsstellung angeordnet ist, würde eine Bewegung des Formgebungselements 154 zusammen mit dem Grundkörper 158 der ersten Formgebungshälfte 150 somit zu einer Beschädigung des Kunststoffbauteils 100 führen.

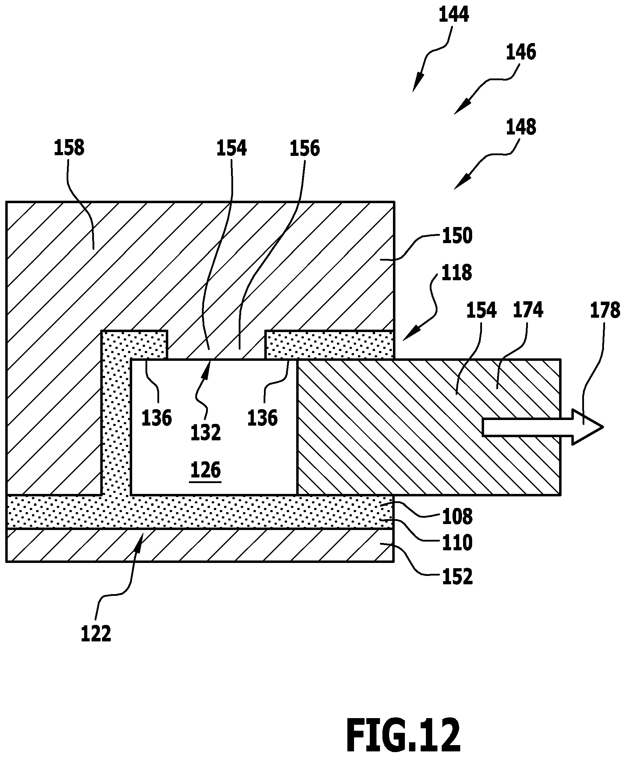

Um eine solche Beschädigung zu vermeiden, wird das bewegliche Formgebungselement 154 daher in einer quer, insbesondere senkrecht, zur Entformungsrichtung 176 ausgerichteten Querrichtung 178 bewegt und dadurch von dem Kunststoffbauteil 100 entfernt (siehe Fig. 12).

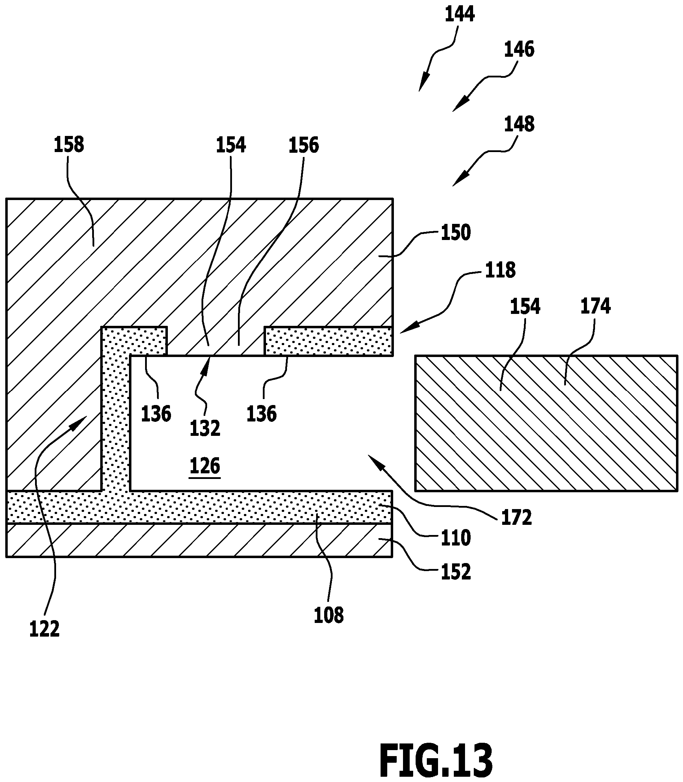

Sobald das bewegliche Formgebungselement 154 die in Fig. 13 dargestellte Entformungsstellung erreicht hat, kann das bewegliche Formgebungselement 154 zusammen mit dem Grundkörper 158 der ersten Formgebungshälfte 150 in der Entformungsrichtung 176 bewegt und von dem Kunststoffbauteil 100 entfernt werden, ohne eine Beschädigung des Kunststoffbauteils 100 befürchten zu müssen.

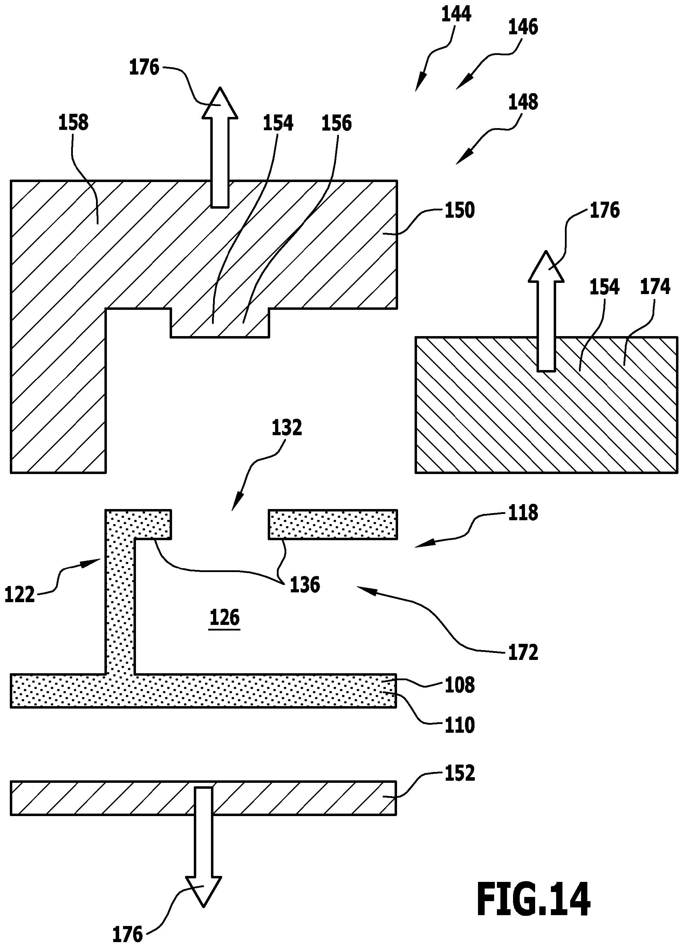

Im Übrigen entspricht die in den Fig. 9 bis 14 dargestellte Ausführungsform des Befestigungsabschnitts 118 hinsichtlich Aufbau, Funktion und Herstellungsverfahren der in den Fig. 2 bis 8 dargestellten Ausführungsform, so dass auf deren vorstehende Beschreibung insoweit Bezug genommen wird.

Dadurch, dass bei dem beschriebenen Kunststoffbauteil 100 in einem Verfahrensschritt sowohl der Grundkörper 108 des Kunststoffbauteils 100 als auch die Befestigungsabschnitte 118 hergestellt werden, kann das Kunststoffbauteil 100 besonders einfach und kostengünstig hergestellt werden.

Wie in gestrichelten Linien in Fig. 10 angedeutet ist, kann es vorgesehen sein, dass vor der Herstellung des Grundkörpers 108 des Kunststoffbauteils 100 ein Zusatzelement 180 oder ein Trägerelement 182 in das Formgebungswerkzeug 146 eingebracht wird.

Das Zusatzelement 180 oder das Trägerelement 182 ist dann insbesondere mit Kunststoffmaterial umspritzbar.

Das fertiggestellte Kunststoffbauteil 100 umfasst somit einerseits den Grundkörper 108 und andererseits das Zusatzelement 180 oder das Trägerelement 182.

Das Zusatzelement 180 oder das Trägerelement 182 können insbesondere als ein Metallprofil ausgebildet sein.

Vorzugsweise dienen das Zusatzelement 180 oder das Trägerelement 182 zur Aufnahme und Übertragung der im Benutzungszustand des Kunststoffbauteils 100 auf dasselbe einwirkenden Kräfte und Lasten. Das Zusatzelement 180 oder das Trägerelement 182 sind somit beispielsweise Bestandteil einer tragenden und/oder kraftübertragenden Struktur einer das Kunststoffbauteil 100 umfassenden Einheit, beispielsweise eines Kraftfahrzeugs.

Mittels des Grundkörpers 108 sind dabei auf einfache und kostengünstige Art und Weise zuverlässige Befestigungsstellen an dem Zusatzelement 180 oder dem Trägerelement 182 gebildet.

## Patentansprüche

1. Verfahren zur Herstellung eines Kunststoffbauteils (100) für einen Antriebsstrang eines Kraftfahrzeugs, umfassend:
Herstellen eines Grundkörpers (108) des Kunststoffbauteils (100) und mindestens eines Befestigungsabschnitts (118) des Grundkörpers (108) in einem einzigen Verfahrensschritt mittels eines Formgebungswerkzeugs (146),
wobei das Kunststoffbauteil (100) ein einstückiges Spritzgussbauteil ist, wobei der Grundkörper (108) und der mindestens eine Befestigungsabschnitt (118) in einem Spritzgussverfahren hergestellt werden,
wobei der Grundkörper (108) eine Gehäusewandung (110) umfasst, mittels welcher eine Innenseite und eine Außenseite (120) des Kunststoffbauteils (100) voneinander getrennt oder trennbar sind, wobei der Befestigungsabschnitt (118) mindestens eine Aufnahmeöffnung (132) umfasst, in welche ein Befestigungselement (116) zur Festlegung desselben an dem Befestigungsabschnitt (118) in einer Einbringrichtung (134) einbringbar ist,
wobei der Befestigungsabschnitt (118) mindestens einen sich in der Einbringrichtung (134) an die Aufnahmeöffnung (132) anschließenden Hinterschneidungsabschnitt (136) umfasst, an welchem das Befestigungselement (116) zur Festlegung desselben entgegen der Einbringrichtung (134) formschlüssig festlegbar ist,
wobei der Befestigungsabschnitt (118) vollständig auf einer der Außenseite (120) zugewandten Seite der Gehäusewandung (110) angeordnet ist und sich von der Gehäusewandung (110) weg erstreckt, wobei der Befestigungsabschnitt (118) eine hohlzylindrische Aufnahme (122) umfasst, die eine zylindermantelförmige Wandung (124) umfasst, welche einen Hohlraum (126) umgibt,
wobei die Aufnahme (122) ferner zwei schlitzförmige Ausnehmungen (138) umfasst, welche sich parallel zu einer Symmetrieachse (128) der Aufnahme (122) erstrecken und die Wandung (124) in zwei einander gegenüberliegende Wandungsabschnitte (140) teilen,
wobei die Wandungsabschnitte (140) der Aufnahme (122) aufgrund der schlitzförmigen Ausnehmungen (138) zumindest abschnittsweise relativ zueinander und/oder relativ zu einem Basisabschnitt (142) der Aufnahme (122) bewegbar, insbesondere elastisch verformbar, sind.

2. Verfahren nach Anspruch 1, **dadurch gekennzeichnet, dass** das Formgebungswerkzeug (146) als ein Negativformwerkzeug (148) ausgebildet ist.

3. Verfahren nach einem der Ansprüche 1 oder 2, **dadurch gekennzeichnet, dass** mindestens ein Befestigungsabschnitt (118), insbesondere mindestens ein Hinterschneidungsabschnitt (136), mittels mindestens eines sich in der Einbringrichtung (134) des Befestigungselements (116) erweiternden Vorsprungs (156) des Formgebungswerkzeugs (146) gebildet wird, wobei der mindestens eine Vorsprung (156) vorzugsweise durch Verformung des Formgebungswerkzeugs (146) und/oder durch Verformung des Kunststoffbauteils (100) aus dem Befestigungsabschnitt (118), insbesondere aus dem Hinterschneidungsabschnitt (136), entfernt wird.

4. Verfahren nach einem der Ansprüche 1 bis 3, **dadurch gekennzeichnet, dass** das Formgebungswerkzeug (146) zwei relativ zueinander bewegbare Formgebungshälften (150, 152) umfasst, welche im Wesentlichen komplementär zu jeweils einer Seite des Grundkörpers (158) geformte Oberflächen aufweisen, und
dass mindestens ein Formgebungselement (154) des Formgebungswerkzeugs (146), insbesondere mindestens ein Vorsprung (156) eines Negativformwerkzeugs (148), relativ zu einer oder relativ zu beiden Formgebungshälften (150, 152) bewegt wird,
wobei zum Entfernen des Kunststoffbauteils (100) aus dem Formgebungswerkzeug (146) vorzugsweise zunächst mindestens eine Formgebungshälfte (150, 152) und anschließend mindestens ein bewegbar an dieser Formgebungshälfte (150, 152) angeordnetes Formgebungselement (154) von dem Kunststoffbauteil (100) entfernt wird, und/oder
wobei zum Entfernen des Kunststoffbauteils (100) aus dem Formgebungswerkzeug (146) vorzugsweise zunächst mindestens ein bewegbar an einer Formgebungshälfte (150, 152) angeordnetes Formgebungselement (154) und anschließend diese Formgebungshälfte (150, 152) von dem Kunststoffbauteil (100) entfernt wird.

5. Verfahren nach einem der Ansprüche 1 bis 4, **dadurch gekennzeichnet, dass** der Hinterschneidungsabschnitt (136) mindestens eines Befestigungsabschnitts (118) durch ein quer, insbesondere senkrecht, zur Einbringrichtung (134) des Befestigungselements (116) bewegbares Formgebungselement (154) des Formgebungswerkzeugs (146) gebildet wird.

6. Verfahren nach einem der Ansprüche 1 bis 5, **dadurch gekennzeichnet, dass** mittels eines Vorsprungs (156) des Formgebungswerkzeugs (146) zur Ausbildung der mindestens einen Aufnahmeöffnung (132) und mittels mindestens eines bewegbaren Formgebungselements (154) des Formgebungswerkzeugs (146) mindestens eine sich nur auf einer Seite des Grundkörpers (108) erstreckende Durchtrittsöffnung (172) gebildet wird.

7. Verfahren nach einem der Ansprüche 1 bis 6, **dadurch gekennzeichnet, dass** der Grundkörper (108) des Kunststoffbauteils (100) und der mindestens eine Befestigungsabschnitt (118) des Grundkörpers (108) in einem Spritzgussverfahren an ein, insbesondere metallisches, Zusatzelement (180) oder Trägerelement (182) des Kunststoffbauteils (100) angespritzt werden.

8. Kunststoffbauteil (100) für einen Antriebsstrang eines Kraftfahrzeugs, umfassend einen Grundkörper (108), welcher mindestens einen Befestigungsabschnitt (118) umfasst,
wobei das Kunststoffbauteil (100) ein einstückiges Spritzgussbauteil ist, welches in einem Spritzgussverfahren hergestellt ist, wobei der Grundkörper (108) und der mindestens eine Befestigungsabschnitt (118) einstückig miteinander ausgebildet sind,
wobei der Grundkörper (108) eine Gehäusewandung (110) umfasst, mittels welcher eine Innenseite und eine Außenseite (120) des Kunststoffbauteils (100) voneinander getrennt oder trennbar sind, wobei der mindestens eine Befestigungsabschnitt (118) mindestens eine Aufnahmeöffnung (132) umfasst, in welche ein Befestigungselement (116) zur Festlegung desselben an dem Befestigungsabschnitt (118) in einer Einbringrichtung (134) einbringbar ist,
wobei der mindestens eine Befestigungsabschnitt (118) mindestens einen sich in der Einbringrichtung (134) an die Aufnahmeöffnung (132) anschließenden Hinterschneidungsabschnitt (136) umfasst, an welchem das Befestigungselement (116) zur Festlegung desselben entgegen der Einbringrichtung (134) formschlüssig festlegbar ist,
wobei der Befestigungsabschnitt (118) vollständig auf einer der Außenseite (120) zugewandten Seite der Gehäusewandung (110) angeordnet ist und sich von der Gehäusewandung (110) weg erstreckt, wobei der Befestigungsabschnitt (118) eine hohlzylindrische Aufnahme (122) umfasst, die eine zylindermantelförmige Wandung (124) umfasst, welche einen Hohlraum (126) umgibt,
wobei die Aufnahme (122) ferner zwei schlitzförmige Ausnehmungen (138) umfasst, welche sich parallel zu einer Symmetrieachse (128) der Aufnahme (122) erstrecken und die Wandung (124) in zwei einander gegenüberliegende Wandungsabschnitte (140) teilen,
wobei die Wandungsabschnitte (140) der Aufnahme (122) aufgrund der schlitzförmigen Ausnehmungen (138) zumindest abschnittsweise relativ zueinander und/oder relativ zu einem Basisabschnitt (142) der Aufnahme (122) bewegbar, insbesondere elastisch verformbar, sind.

9. Kraftfahrzeug, umfassend mindestens ein Kunststoffbauteil (100) nach Anspruch 8.

## Claims

1. Method for producing a plastics component (100) for a power train of a motor vehicle, comprising:
producing a base body (108) of the plastics component (100) and at least one fastening portion (118) of the base body (108) in a single method step by means of a moulding tool (146),
wherein the plastics component (100) is a one-piece injection moulded component,
wherein the base body (108) and the at least one fastening portion (118) are produced by an injection moulding method,
wherein the base body (108) comprises a wall (110), by means of which an inside and an outside (120) of the plastics component (100) are separated or separable from one another,
wherein the fastening portion (118) comprises at least one receiving opening (132) into which a fastening element (116) is introducible in a direction of introduction (134), for the purpose of fixing it to the fastening portion (118),
wherein the fastening portion (118) comprises at least one undercut portion (136) which adjoins the receiving opening (132) in the direction of introduction (134) and to which the fastening element (116) is fixable with positive engagement for the purpose of fixing it in opposition to the direction of introduction (134),
wherein the fastening portion (118) is arranged entirely on a side of the wall (110) that faces the outside (120) and extends away from the wall (110),
wherein the fastening portion (118) comprises a hollow cylindrical receptacle (122) which comprises a wall (124) that is in the shape of a cylindrical outer face and surrounds a cavity (126),
wherein the receptacle (122) further comprises two slot-shaped recesses (138) that extend in parallel to an axis of symmetry (128) of the receptacle (122) and divide the wall (124) into two mutually opposed wall portions (140),
wherein because of the slot-shaped recesses (138), the wall portions (140) of the receptacle (122) are movable, in particular elastically deformable, at least in certain regions in relation to one another and/or in relation to a base portion (142) of the receptacle (122).

2. Method according to Claim 1, **characterised in that** the moulding tool (146) takes the form of a female mould tool (148).

3. Method according to either of Claims 1 or 2, **characterised in that** at least one fastening portion (118), in particular at least one undercut portion (136), is formed by means of at least one projection (156) from the moulding tool (146) that widens in the direction (134) of introducing the fastening element (116), wherein the at least one projection (156) is preferably removed from the fastening portion (118), in particular from the undercut portion (136), by deforming the moulding tool (146) and/or by deforming the plastics component (100).

4. Method according to any one of Claims 1 to 3, **characterised in that** the moulding tool (146) comprises two shaping halves (150, 152) that are movable in relation to one another and have surfaces which are each formed to be substantially complementary to a respective side of the base body (158), and
**in that** at least one shaping element (154) of the moulding tool (146), in particular at least one projection (156) from a female mould tool (148), is moved in relation to one or in relation to both shaping halves (150, 152), wherein for the purpose of removing the plastics component (100) from the moulding tool (146), preferably first at least one shaping half (150, 152) and then at least one shaping element (154) arranged movably on this shaping half (150, 152) is moved away from the plastics component (100),
and/or
wherein for the purpose of removing the plastics component (100) from the moulding tool (146), preferably first at least one shaping element (154) that is arranged movably on a shaping half (150, 152) and then this shaping half (150, 152) is moved away from the plastics component (100).

5. Method according to any one of Claims 1 to 4, **characterised in that** the undercut portion (136) of at least one fastening portion (118) is formed by a shaping element (154) of the moulding tool (146) that is movable transversely, in particular perpendicular, to the direction (134) of introducing the fastening element (116).

6. Method according to any one of Claims 1 to 5, **characterised in that** at least one through opening (172) that extends on only one side of the base body (108) is formed by means of a projection (156) from the moulding tool (146) for making the at least one receiving opening (132) and by means of at least one movable shaping element (154) of the moulding tool (146).

7. Method according to any one of Claims 1 to 6, **characterised in that** the base body (108) of the plastics component (100) and the at least one fastening portion (118) of the base body (108) are moulded on in an injection moulding method onto an in particular metallic additional element (180) or support element (182) of the plastics component (100).

8. Plastics component (100) for a power train of a motor vehicle, comprising a base body (108) that comprises at least one fastening portion (118), wherein the plastics component (100) is a one-piece injection moulded component that is produced by an injection moulding method, wherein the base body (108) and the at least one fastening portion (118) are made in one piece with one another,
wherein the base body (108) comprises a wall (110), by means of which an inside and an outside (120) of the plastics component (100) are separated or separable from one another,
wherein the at least one fastening portion (118) comprises at least one receiving opening (132) into which a fastening element (116) is introducible in a direction of introduction (134), for the purpose of fixing it to the fastening portion (118),
wherein the at least one fastening portion (118) comprises at least one undercut portion (136) which adjoins the receiving opening (132) in the direction of introduction (134) and to which the fastening element (116) is fixable with positive engagement for the purpose of fixing it in opposition to the direction of introduction (134),
wherein the fastening portion (118) is arranged entirely on a side of the wall (110) that faces the outside (120) and extends away from the wall (110),
wherein the fastening portion (118) comprises a hollow cylindrical receptacle (122) which comprises a wall (124) that is in the shape of a cylindrical outer face and surrounds a cavity (126),
wherein the receptacle (122) further comprises two slot-shaped recesses (138) that extend in parallel to an axis of symmetry (128) of the receptacle (122) and divide the wall (124) into two mutually opposed wall portions (140),
wherein because of the slot-shaped recesses (138), the wall portions (140) of the receptacle (122) are movable, in particular elastically deformable, at least in certain regions in relation to one another and/or in relation to a base portion (142) of the receptacle (122).

9. Motor vehicle, comprising at least one plastics component (100) according to Claim 8.

## Revendications

1. Procédé de fabrication d'un composant en matière plastique (100) pour une chaîne cinématique d'un véhicule automobile, comprenant :
la fabrication d'un corps de base (108) d'un composant en matière plastique (100) et d'au moins une section de fixation (118) du corps de base (108) lors d'une unique étape de procédé au moyen d'un outil de façonnage (146),
dans lequel le composant en matière plastique (100) est un composant moulé par injection d'un seul tenant,
dans lequel le corps de base (108) et l'au moins une section de fixation (118) sont fabriqués lors d'un procédé de moulage par injection dans lequel le corps de base (108) présente une paroi de boîtier (110), au moyen de laquelle une face intérieure et une face extérieure (120) du composant en matière plastique (100) sont ou peuvent être séparées l'une de l'autre,
dans lequel la section de fixation (118) comprend au moins une ouverture de logement (132), dans laquelle un élément de fixation (116) peut être introduit dans une direction d'introduction (134) aux fins de l'immobilisation de celui-ci au niveau de la section de fixation (118),
dans lequel la section de fixation (118) comprend au moins une section de contre-dépouille (136) se raccordant dans la direction d'introduction (134) à l'ouverture de logement (132), au niveau de laquelle l'élément de fixation (116) peut être immobilisé par complémentarité de forme aux fins de la fixation de celui-ci dans le sens opposé à la direction d'introduction (134),
dans lequel la section de fixation (118) est disposée en totalité sur une face, tournée vers la face extérieure (120), de la paroi de boîtier (110) et s'étend de manière à s'éloigner de la paroi de boîtier (110),
dans lequel la section de fixation (118) comprend un logement (122) cylindrique creux, qui comprend une paroi (124) en forme d'enveloppe cylindrique, laquelle entoure un espace creux (126),
dans lequel le logement (122) comprend en outre deux évidements (138) en forme d'entaille, lesquels s'étendent de manière parallèle par rapport à un axe de symétrie (128) du logement (122) et divisent la paroi (124) en deux sections de paroi (140) se faisant face l'une l'autre,
dans lequel les sections de paroi (140) du logement (122) peuvent être déplacées, en particulier déformées élastiquement, en raison des évidements (138) en forme d'entaille au moins par endroits les unes par rapport aux autres et/ou par rapport à une section de base (142) du logement (122).

2. Procédé selon la revendication 1, **caractérisé en ce que** l'outil de façonnage (146) est réalisé en tant qu'un outil à moule négatif (148).

3. Procédé selon l'une quelconque des revendications 1 ou 2, **caractérisé en ce qu'**au moins une section de fixation (118), en particulier au moins une section de contre-dépouille (136), est formée au moyen d'au moins une saillie (156), s'élargissant dans la direction d'introduction (134) de l'élément de fixation (116), de l'outil de façonnage (146), dans lequel l'au moins une saillie (156) est retirée de préférence par déformation de l'outil de façonnage (146) et/ou par déformation du composant en matière plastique (100), de la section de fixation (118), en particulier de la section de contre-dépouille (136).

4. Procédé selon l'une quelconque des revendications 1 à 3, **caractérisé en ce que** l'outil de façonnage (146) comprend deux moitiés de façonnage (150, 152) pouvant être déplacées l'une par rapport à l'autre, lesquelles présentent des surfaces moulées de manière sensiblement complémentaire à respectivement une face du corps de base (158), et que l'au moins un élément de façonnage (154) de l'outil de façonnage (146), en particulier au moins une saillie (156) d'un outil à moule négatif (148) est déplacé par rapport à un ou par rapport aux deux moitiés de façonnage (150, 152),
dans lequel pour retirer le composant en matière plastique (100) de l'outil de façonnage (146), de préférence d'abord au moins une moitié de façonnage (150, 152) puis au moins un élément de façonnage (154) disposé de manière à pouvoir être déplacé au niveau de ladite moitié de façonnage (150, 152) sont retirés du composant en matière plastique (100),
et/ou
dans lequel pour retirer le composant en matière plastique (100) de l'outil de façonnage (146), de préférence d'abord au moins un élément de façonnage (154) disposé de manière à pouvoir être déplacé au niveau d'une moitié de façonnage (150, 152) puis ladite moitié de façonnage (150, 152) sont retirés du composant en matière plastique (100).

5. Procédé selon l'une quelconque des revendications 1 à 4, **caractérisé en ce que** la section de contre-dépouille (136) d'au moins une section de fixation (118) est formée par un élément de façonnage (154), pouvant être déplacé de manière transversale, en particulier de manière perpendiculaire, par rapport à la direction d'introduction (134) de l'élément de fixation (116), de l'outil de façonnage (146).

6. Procédé selon l'une quelconque des revendications 1 à 5, **caractérisé en ce qu'**au moins une ouverture de passage (172) s'étendant seulement sur une face du corps de base (108) est formée au moyen d'une saillie (156) de l'outil de façonnage (146) pour réaliser l'au moins une ouverture de logement (132) et au moyen d'au moins un élément de façonnage (154) pouvant être déplacé de l'outil de façonnage (146).

7. Procédé selon l'une quelconque des revendications 1 à 6, **caractérisé en ce que** le corps de base (108) du composant en matière plastique (100) et l'au moins une section de fixation (118) du corps de base (108) sont appliqués par injection lors d'un procédé de moulage par injection au niveau d'un élément supplémentaire (180) ou élément de support (182), en particulier métallique, du composant en matière plastique (100).

8. Composant en matière plastique (100) pour une chaîne cinématique d'un véhicule automobile, comprenant un corps de base (108), lequel comprend au moins une section de fixation (118),
dans lequel le composant en matière plastique (100) est un composant moulé par injection d'un seul tenant, lequel est fabriqué lors d'un procédé de moulage par injection, dans lequel le corps de base (108) et l'au moins une section de fixation (118) sont réalisés d'un seul tenant l'un avec l'autre, dans lequel le corps de base (108) comprend une paroi de boîtier (110), au moyen de laquelle une face intérieure et une face extérieure (120) du composant en matière plastique (100) sont ou peuvent être séparées l'une de l'autre,
dans lequel l'au moins une section de fixation (118) comprend au moins une ouverture de logement (132), dans laquelle un élément de fixation (116) peut être introduit dans une direction d'introduction (134) aux fins de l'immobilisation de celui-ci au niveau de la section de fixation (118), dans lequel l'au moins une section de fixation (118) comprend au moins une section de contre-dépouille (136) se raccordant dans la direction d'introduction (134) à l'ouverture de logement (132), au niveau de laquelle l'élément de fixation (116) peut être immobilisé par complémentarité de forme aux fins de la fixation de celui-ci dans le sens opposé à la direction d'introduction (134),
dans lequel la section de fixation (118) est disposée en totalité sur une face, tournée vers la face extérieure (120), de la paroi de boîtier (110) et s'étend de manière à s'éloigner de la paroi de boîtier (110),
dans lequel la section de fixation (118) comprend un logement (122) cylindrique creux, qui comprend une paroi (124) en forme d'enveloppe cylindrique, laquelle entoure un espace creux (126),
dans lequel le logement (122) comprend en outre deux évidements (138) en forme d'entaille, lesquels s'étendent de manière parallèle par rapport à un axe de symétrie (128) du logement (122) et divisent la paroi (124) en deux sections de paroi (140) se faisant face l'une l'autre,
dans lequel les sections de paroi (140) du logement (122) peuvent être déplacées, en particulier déformées élastiquement, en raison des évidements (138) en forme d'entaille au moins par endroits les unes par rapport aux autres et/ou par rapport à une section de base (142) du logement (122).

9. Véhicule automobile comprenant au moins un composant en matière plastique (100) selon la revendication 8.
